# EUROPEAN PATENT APPLICATION

(11) **EP 1 298 654 A2**
(43) Date of publication of application: **02.04.2003**
(21) Application number: 02255971.0
(22) Date of filing: 28.08.2002
(51) Int. Cl.: G11B 19/20, H02K 15/00

(54) **Method for fabricating a disk mounting for a motor hub of a hard disk drive, the motor hub thus obtained and a motor including this motor hub**

(30) Priority: 28.08.2001 JP 2001258470
(71) Applicant: Minebea Kabushiki Kaisha, Kitasaku-gun, Nagano-ken (JP)
(72) Inventor: Obara, Rikuro, Minebea Kabushiki-Kaisha, Kitasuku-gun, Nagano-ken (JP)
(74) Representative: Murgatroyd, Susan Elizabeth

(57) **Abstract**

A grinding operation is performed by rotating a motor hub (1) at high speed around the central axis thereof, and urging an outer peripheral surface of a grinding wheel (8) rotated at high speed around the central axis against the upper surface of the outwardly extending flange (4) for supporting on its upper surface (B) the lower surface of the central portion of a magnetic disk. The upper surface of the flange (4) can be processed in high precision. Thus, a compact, large capacity, and reliable hard disk drive device is to be provided by reducing the rotational runout of the magnetic disk incorporated within the hard disk drive device.

## Description

The present invention relates to a method for processing a magnetic disk mount portion of a motor hub of a hard disk drive device, a motor hub manufactured through such method, and a motor including such motor hub.

The hard disk drive device is used extensively as an internal or external memory of computers, and the capacity required for the hard disk drive device has increased with the years. Further, the device must be produced at low cost and in compact shape.

Thus the trucks defined on the magnetic disk of the hard disk drive devices are densified more and more so that it becomes necessary to rotate the magnetic disk accurately in order to facilitate the access of the magnetic head to the intended truck on the magnetic disk.

The countermeasures taken in the prior art to improve the accuracy of rotation of the magnetic disk are the improvement of the dimensional accuracy of the machining operation to be performed on the motor hub to which magnetic disk or disks are to be mounted, the improvement of the accuracy of the rotation of the bearing of the motor for driving the disks, and the improvement of the accuracy on assembling the components of the motor, as well as the countermeasures against resonance frequency.

However, these countermeasures are known to be insufficient to deal with the problems accompanied with the densification of the trucks. The essential conditions in solving these problems are high evenness or flatness of the magnetic disk mounted on the motor hub and the reduction of the plane wave shape deformation.

The above-mentioned essential conditions are for inhibiting the rotational runout of the magnetic disk upon utilizing the hard disk drive device. It is especially necessary to satisfy the above-mentioned conditions in the case in which a hydraulic bearing is used in the rotation supporting portion of the motor.

In satisfying the above-mentioned conditions, it is necessary to improve the accuracy of processing the motor hub, especially on the surface on which the magnetic disks are mounted.

Generally, the motor hub is manufactured by a cutting operation since this can be performed easily and through fewer processes.

During cutting, the workpiece, which is the motor hub is rotated at high speed, and the surface to be processed is to be cut through the contact with the cutting tool. The accuracy of processing on the surface to be processed depends on the precision of the rotation of the workpiece during the process. In other words, the rotational runout (in the axial and radial direction) of the workpiece will show up as the distortion on the processed surface.

In conclusion, the accurate processing through the cutting operation is cumbersome or difficult, and requires higher manufacturing cost. This is because the cutting device of high precision is required, and the conditions for cutting such as the number of rotation of the workpiece, the feed rate of the cutting tool, and the shape of the cutting tool must be set and maintained in strict manner.

It is an object of the present invention to process a disk supporting surface of the motor hub of the hard disk drive device in high precision and easily. This will reduce the rotational runout of the magnetic disk. Thus, a compact, large capacity, and reliable hard disk drive device can be realized.

Accordingly, one aspect of the invention consists in a method for processing a magnetic disk mount portion of a motor hub of the hard disk drive device including a cylindrical disk fitting surface around which a central aperture of a magnetic disk or disks are to be fit, and an outwardly extending flange for supporting on its upper surface the lower surface of the central portion of the magnetic disk, the method being characterized in that the motor hub is rotated in high speed around the central axis thereof, and outer peripheral surface of a grinding wheel rotated in high speed around the central axis thereof is urged on the upper surface of the outwardly extending flange.

The method for processing a magnetic disk mount portion of the motor hub of the hard disk drive device according to the present invention is characterized in that said grinding wheel is attached to a spindle of the rotationally driving apparatus connected to the carriage displaceable in X, Y, and Z directions, wherein the grinding wheel is urged against the magnetic disk mount portion of the hub through the displacement of the carriage.

The method for processing the magnetic disk mount portion of the motor hub of the hard disk drive device according to the present invention is characterized in that said grinding wheel is attached to the spindle of the rotationally driving apparatus connected to the carriage so as to pivot around the axis extending orthogonal to the central axis of the motor hub, wherein the grinding wheel is urged against the magnetic disk mount portion of the hub by pivoting the rotationally driving apparatus with respect to the carriage.

The method for processing the magnetic disk mount portion of the motor hub of the hard disk drive device according to the present invention is characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the grinding wheel is urged against the magnetic disk mount portion of the hub by pivoting the rotationally driving apparatus with respect to the carriage as well as the displacement of the carriage.

A method for processing a magnetic disk mount portion of a motor hub of the hard disk drive device including a cylindrical disk fitting surface around which a central aperture of a magnetic disk or disks are to be fit, and an outwardly extending flange for supporting on its upper surface the lower surface of the central portion of the magnetic disk, the method being characterized in that:
the motor hub is rotated in high speed around the central axis thereof, and the grinding wheel is also rotated in high speed around the central axis thereof, the grinding wheel includes a pair of tapered surfaces extending axially outwardly to reduce the diameter thereof and orthogonal with each other from an edge defined at the intersection of the tapered surfaces, wherein the grinding operation is performed by urging the tapered surfaces against the disk fitting surface and the upper surface of the outwardly extending flange respectively.

The method for processing a magnetic disk mount portion of the motor hub of the hard disk drive device according to the present invention is characterized in that said grinding wheel is attached to a spindle of the rotationally driving apparatus connected to the carriage displaceable in X, Y, and Z directions, wherein the grinding wheel is urged against the magnetic disk mount portion of the hub through the displacement of the carriage.

The method for processing the magnetic disk mount portion of the motor hub of the hard disk drive device according to the present invention is characterized in that said grinding wheel is attached to the spindle of the rotationally driving apparatus connected to the carriage so as to pivot around the axis extending orthogonal to the central axis of the motor hub, wherein the grinding wheel is urged against the magnetic disk mount portion of the hub by pivoting the rotationally driving apparatus with respect to the carriage.

The method for processing the magnetic disk mount portion of the motor hub of the hard disk drive device according to the present invention is characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the grinding wheel is urged against the magnetic disk mount portion of the hub by pivoting the rotationally driving apparatus with respect to the carriage as well as the displacement of the carriage.

A motor hub of the hard disk drive device comprising a magnetic disk mount portion including a cylindrical disk fitting surface around which a central aperture of a magnetic disk or disks are to be fit, and an outwardly extending flange for supporting on its upper surface the lower surface of the central portion of the magnetic disk, the motor hub being characterized in that:
the motor hub is rotated in high speed around the central axis thereof, and the upper surface of the outwardly extending flange is adapted to be ground by the outer peripheral surface of the grinding wheel rotated in high speed around the axis thereof.

The motor hub of the hard disk drive device according to the present invention is characterized in that said grinding wheel is attached to a spindle of the rotationally driving apparatus connected to the carriage displaceable in X, Y, and Z directions, wherein the magnetic disk mount portion of the hub is ground through the displacement of the carriage.

The motor hub of the hard disk drive device according to the present invention is characterized in that said grinding wheel is attached to the spindle of the rotationally driving apparatus connected to the carriage so as to pivot around the axis extending orthogonal to the central axis of the motor hub, wherein the magnetic disk mount portion of the hub is ground by pivoting the rotationally driving apparatus with respect to the carriage.

The motor hub of the hard disk drive device according to the present invention is characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the magnetic disk mount portion of the hub is ground by pivoting the rotationally driving apparatus with respect to the carriage, and by displacing the carriage.

A motor hub of the hard disk drive device comprising a magnetic disk mount portion including a cylindrical disk fitting surface around which a central aperture of a magnetic disk or disks are to be fit, and an outwardly extending flange for supporting on its upper surface the lower surface of the central portion of the magnetic disk, the motor hub being characterized in that:
the motor hub is rotated in high speed around the central axis thereof, and the grinding wheel is also rotated in high speed around the central axis thereof, the grinding wheel includes a pair of tapered surfaces extending axially outwardly to reduce the diameter thereof and orthogonal with each other from an edge defined at the intersection of the tapered surfaces, wherein the grinding operation is performed by urging the tapered surfaces against the disk fitting surface and the upper surface of the outwardly extending flange respectively.

The motor hub of the hard disk drive device according to the present invention is characterized in that said grinding wheel is attached to a spindle of the rotationally driving apparatus connected to the carriage displaceable in X, Y, and Z directions, wherein the magnetic disk mount portion of the hub is ground through the displacement of the carriage.

The motor hub of the hard disk drive device according to the present invention is characterized in that said grinding wheel is attached to the spindle of the rotationally driving apparatus connected to the carriage so as to pivot around the axis extending orthogonal to the central axis of the motor hub, wherein the magnetic disk mount portion of the hub is ground by pivoting the rotationally driving apparatus with respect to the carriage.

The motor hub of the hard disk drive device according to the present invention is characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the magnetic disk mount portion of the hub is ground by pivoting the rotationally driving apparatus with respect to the carriage, and by displacing the carriage.

A motor for the hard disk drive device including a motor hub around the outer periphery of which a magnetic disk or a plurality of magnetic disks are to be mounted, the motor hub is rotatably supported on a base through a bearing device, the motor being characterized in that the motor hub is provided with a magnetic disk mount portion including a cylindrical disk fitting surface around which a central aperture of a magnetic disk or disks are to be fit, and an outwardly extending flange for supporting on its upper surface the lower surface of the central portion of the magnetic disk, wherein the upper surface of the outwardly extending flange of the motor hub rotated in high speed around the central axis thereof is adapted to be ground by an outer peripheral surface of a grinding wheel rotated in high speed around the central axis thereof.

The motor for the hard disk drive device according to the present invention is characterized in that said grinding wheel is attached to a spindle of the rotationally driving apparatus connected to the carriage displaceable in X, Y, and Z directions, wherein the magnetic disk mount portion of the hub is ground through the displacement of the carriage.

The motor for the hard disk drive device according to the present invention, characterized in that said grinding wheel is attached to the spindle of the rotationally driving apparatus connected to the carriage so as to pivot around the axis extending orthogonal to the central axis of the motor hub, wherein the magnetic disk mount portion of the hub is ground by pivoting the rotationally driving apparatus with respect to the carriage.

The motor for the hard disk drive device according to the present invention, characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the magnetic disk mount portion of the hub is ground by pivoting the rotationally driving apparatus with respect to the carriage, and by displacing the carriage.

A motor for the hard disk drive device including a motor hub around the outer periphery of which a magnetic disk or a plurality of magnetic disks are to be mounted, the motor hub is rotatably supported on a base through a bearing device, the motor being characterized in that the motor hub is provided with a magnetic disk mount portion including a cylindrical disk fitting surface around which a central aperture of a magnetic disk or disks are to be fit, and an outwardly extending flange for supporting on its upper surface the lower surface of the central portion of the magnetic disk, wherein the disk fitting surface and the upper surface of the outwardly extending flange of the motor hub rotated in high speed around the central axis thereof are adapted to be ground by a pair of tapered surfaces of a grinding wheel rotated in high speed around the central axis thereof, the tapered surfaces extending axially outwardly with reducing the diameter thereof from an edge define a right angle at the edge defined therebetween.

The motor for the hard disk drive device according to the present invention, characterized in that said grinding wheel is attached to a spindle of the rotationally driving apparatus connected to the carriage displaceable in X, Y, and Z directions, wherein the magnetic disk mount portion of the hub is ground through the displacement of the carriage.

The motor for the hard disk drive device according to the present invention, characterized in that said grinding wheel is attached to the spindle of the rotationally driving apparatus connected to the carriage so as to pivot around the axis extending orthogonal to the central axis of the motor hub, wherein the magnetic disk mount portion of the hub is ground by pivoting the rotationally driving apparatus with respect to the carriage.

The motor for the hard disk drive device according to the present invention, characterized in that said grinding wheel is attached to a spindle of the rotationally driving apparatus connected to the carriage displaceable in X, Y, and Z directions, and the rotationally driving apparatus is connected to the carriage so as to pivot around the axis extending orthogonal to the central axis of the motor hub, wherein the magnetic disk mount portion of the hub is ground by pivoting the rotationally driving apparatus with respect to the carriage, and by displacing the carriage.

Further featuresof the present invention will become apparent to those skilled in the art to which the present invention relates from reading the following specification with reference to the accompanying drawings, in which:
Fig. 1 is a vertical cross sectional view showing a motor hub of the present invention;

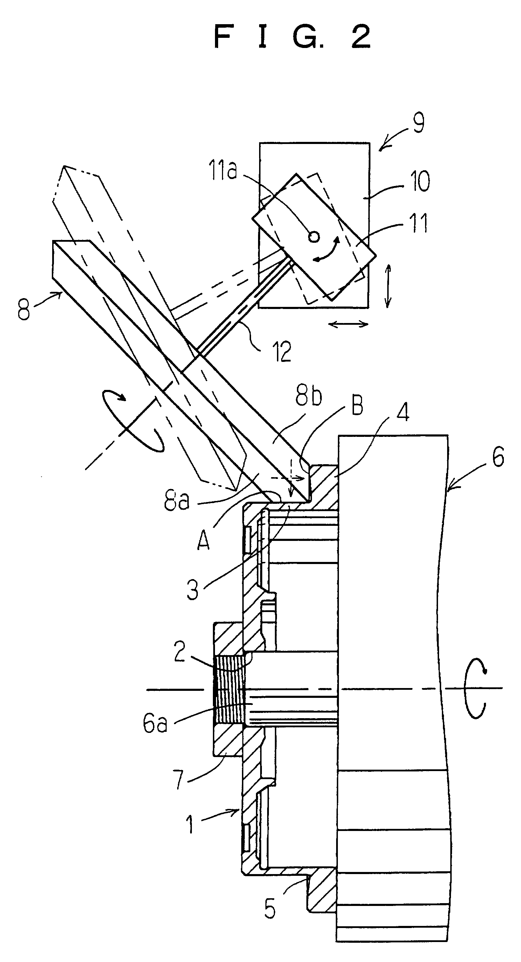

Fig. 2 is a partially broken elevational view showing a process in accordance with the present invention;
Fig. 3 is a partially broken elevational view showing the other process in accordance with the present invention;
Fig. 4 is a vertical cross sectional view showing a motor of the present invention and magnetic disks mounted thereon; and
Fig. 5 is a vertical cross sectional view showing a motor of another embodiment of the present invention and magnetic disks mounted thereon.

A method for processing a magnetic disk mount portion of a motor hub in accordance with the present invention will now be described with reference to the attached drawings.

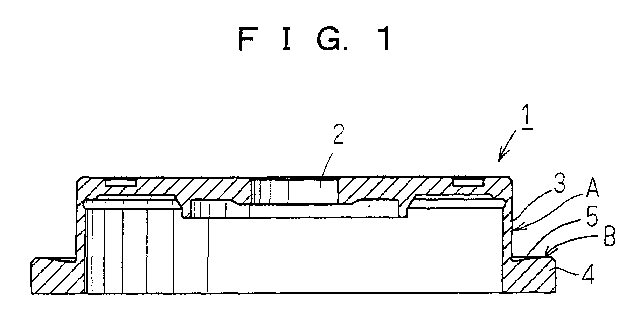

The shape of a motor hub of the hard disk drive device may vary depending on the number of the magnetic disks to be mounted around the hub, the size of the hard disk drive device itself, or the structure of the motor. An example of the shape of the motor hub is shown in Fig. 1 only as an illustrative example. As shown in Fig. 1, a hub 1 is provided with a central aperture 2 to be fit around the spindle of the motor. The hub also includes a skirt 3 extending downwardly from the outer periphery thereof, and a flange 4 extending outwardly from the lower edge of the skirt 3. An undercut 5 is formed on the upper surface of the flange 4.

The outer peripheral surface of the downwardly extending skirt 3 is a disk fitting surface A, and the upper surface of the outwardly extending flange 4 is a disk supporting surface B. These surfaces A and B constitute a mount for a magnetic disk or disks.

The hub 1 is for example processed preliminary by cutting it to the predetermined size and shape. The hub will then be secured to a clamping fixture 6 by inserting a spindle 6a of the fixture through the central aperture 2 of the hub and tightening a nut 7 onto the thread provided at the distal end of the spindle. The undercut 5 is also formed preliminary by cutting operation.

A grinding wheel 8 includes a pair of tapered surfaces 8a, 8b extending axially outwardly to reduce the diameter thereof and orthogonal with each other from an edge defined at the intersection of the tapered surfaces 8a, 8b.

A grinder 9 for operating the grinding wheel 8 includes a rotationally driving apparatus 11 mounted on a carriage 10 so as to be displaceable in X, Y, and Z directions. The grinding wheel 8 is attached to a spindle 12 of the rotationally driving apparatus. The contact angle of the grinding wheel 8 with the hub 1 can be adjusted by controlling swinging movement of the rotationally driving apparatus 11 relative to the carriage 10 about an axis 11a extending orthogonal to the spindle 6a of the clamping fixture.

The grinding wheel is adapted to be rotated in high speed by the grinder 9 of the structure as mentioned above. During the grinding operation, the angle of the grinding wheel relative to the hub can be set so as to make each of the pair of tapered surfaces 8a, 8b parallel to the surfaces A and B respectively. The hub 1 is also rotated in high speed around the central axis thereof by driving the clamping fixture 6.

The disk fitting surface A and the disk supporting surface B can be leveled by urging the grinding wheel 8 against the surfaces A and B through shifting the carriage 10 in the vertical and / or horizontal directions.

The grinding operation can also be performed by swinging the grinding wheel 8 around the axis 11a.

In the above-mentioned grinding operation, the hub 1 is rotated in high speed to be processed and the grinding wheel 8 corresponding to the cutting tool employed for the cutting operation. In this connection, even if the rotational runout phenomena is caused on the hub as well as the grinding wheel these elements are adapted to be contacted with each other in the peak of the stroke of the runout, so that essentially no effects are caused by the rotational runout of the elements on the accuracy of the processing of the surfaces such as the disk fitting surface A and the disk supporting surface B.

The feed rate of the grinding wheel can be adjusted finely so that the resistance encountered on grinding can be controlled to be minimal. In this connection, the grinding operation can provide a surface much smoother than that obtained through the cutting operation.

In other words, the accuracy on processing the disk fitting surface A and the disk supporting surface B can be enhanced dramatically relative to that obtained by cutting operation, so that the plane wave shape deformation on the disk supporting surface B can be reduced to the minimum.

Further, in the grinding operation, the roughness on the ground surface can be adjusted arbitrarily through the selection of the grinding wheel 8.

In the above-mentioned embodiment, the grinding operation is adapted to be performed by displacing the grinding wheel 8 relative to the side of the hub 1. Whereas, the grinding operation can also be performed by displacing the hub 1 toward the grinding wheel in the direction vertical to the spindle so as to urge the disk fitting surface A against the tapered surface 8a of the grinding wheel, and by displacing the hub 1 in the axial direction to grind the disk supporting surface B by the tapered surface 8b of the grinding wheel.

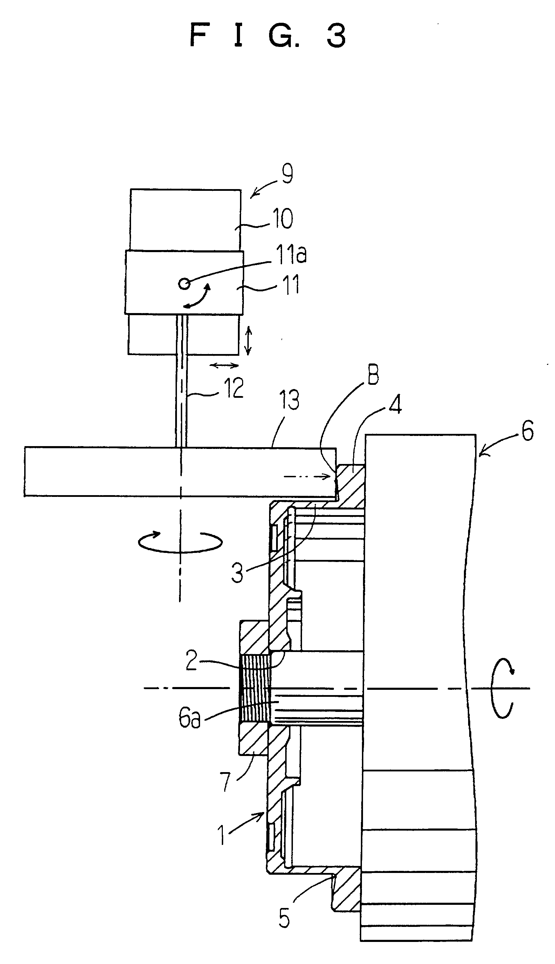

Further, in the above mentioned embodiment, the disk fitting surface A and the disk supporting surface B are to be ground at the same time by using a whole shape grinding wheel 8. Whereas, sometimes only the disk supporting surface B is adapted to be ground by a column shaped grinding wheel 13 as shown in Fig. 3.

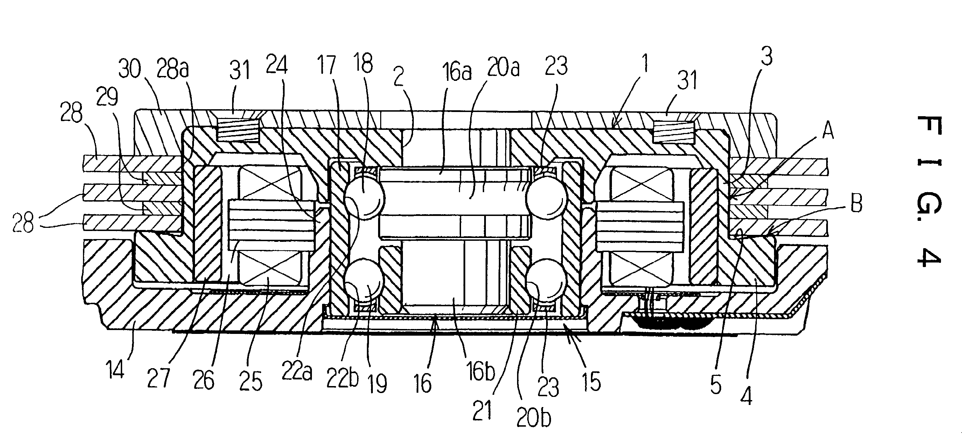

An embodiment of a motor including the hub of the structure as mentioned above will now be described with reference to Fig. 4 in which magnetic disks are to be provided around the hub.

The hub 1 is adapted to be rotatably supported by means of a bearing device 15 comprising a stepped shaft 16 including an enlarged diameter shaft portion 16a and a reduced diameter shaft portion 16b, a sleeve outer ring 17, and two rows of balls 18, 19 interposed between the shaft and the ring.

The outer periphery of the enlarged diameter shaft portion 16a is provided with an inner ring raceway 20a for the one row of the balls 18. Fit around the reduced diameter shaft portion 16b is an inner ring 21 around the outer periphery of which is provided with an inner ring raceway 20b for the other row of the balls 19. Provided on the inner peripheral surface of the sleeve outer ring are an outer ring raceway 22a for the one row of the balls 18 and an outer ring raceway 22b for the other row of the balls 19. What is designated by the reference numeral 23 is a retainer.

In the above-mentioned structure of the bearing device 15, no inner ring is required for the one row of balls since the inner ring raceway 20a is formed directly on the enlarged diameter shaft portion 16a. Thus the diameter of the shaft can be enlarged in that portion to enhance the rigidity of the shaft. The rotational runout and the oscillation of the shaft can also be reduced. Further, the accuracy of the rotation can be enhanced by urging the inner ring 21 upwardly to provide a suitable pre-load on the ball.

The sleeve outer ring 17 is fit and secured into the bearing holder 24 protruding upwardly from the central portion of a base 14. The hub 1 is fit and secured at its central opening 2 around the upper end of the stepped shaft 16.

Provided around the bearing holder 24 is a stator 26 on which coils 25 are wound. A magnet 27 is provided on the inner surface of the downwardly extending skirt 3 of the hub 1 so as to oppose the stator 26.

In Fig. 4, those designated by the reference numeral 28, 28 are magnetic disks fit at their central opening 28a around the disk fitting surface A of the downwardly extending skirt 3. The magnetic disks are spaced apart from each other by interposing an annular spacer 29 therebetween. The assembly comprising magnetic disks and the spacers is sandwiched and secured between the disk supporting surface B of the outwardly extending flange 4 and a disk retainer plate 30. The retainer plate 30 is fixed on the upper surface of the hub by screws 31, 31.

In the motor of the structure as mentioned above, the flatness of the magnetic disks 28, 28 can be assured in high level, and the runout of the surface of the magnetic disks can also be suppressed, since the disk fitting surface A and the disk supporting surface B of the hub 1 is ground accurately by the processing as described above.

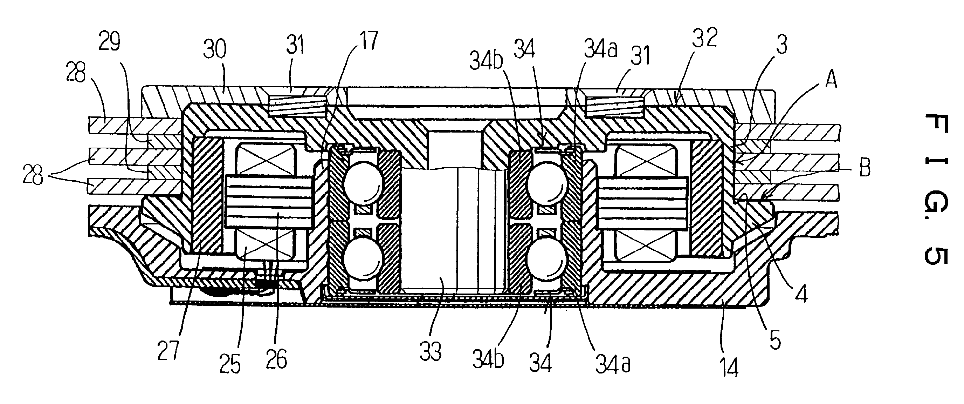

Another embodiment of the motor in accordance with the present invention will now be described with reference to Fig. 5. This motor is different from the motor of the above-mentioned embodiment in the following points:
(1) a hub 32 and a shaft 33 are formed integrally with each other of the same material; and
(2) a shaft is rotatably supported through a pair of upper and lower ball bearings 34, 34.

More specifically, the hub 32 includes the hollow cylindrical straight shaft 33 extending downwardly from the central portion of the lower surface thereof. The shaft 33 is fit and secured within inner races 34b, 34b of the ball bearings 34, 34. Outer races 34a, 34a of the ball bearings 34, 34 are fit and secured within the bearing holder 24.

In the motor of the structure as mentioned above, it is unnecessary to assemble the hub with the shaft since these members are formed integrally with each other of the same material. Thus, it is also unnecessary to consider how accurately assembled the hub is with the shaft. This also leads to the advantage that the number of steps required for manufacturing the motor can be reduced.

The members of the motor illustrated in Fig. 5 other than those mentioned above are same as those of the motor illustrated in Fig. 4.

In accordance with the present invention, the resistance produced between the grinding wheel and the surface to be processed can be controlled to a much lower value than that caused by the cutting operation, since the surface for supporting the magnetic disk or the upper surface of the outwardly extending flange is grounded. Further, the runout of the workpiece on the processing hardly affects the accuracy of processing, since the motor hub which is the workpiece and the grinding wheel are rotated at high speed during processing. Thus the surface for supporting the magnetic disk can be processed to have high flatness. The motor hub including the surface for supporting the magnetic disk processed in high precision can support the magnetic disk or disks stably without compromising the flatness of the magnetic disk.

In the motor including the above-mentioned hub, the runout of the surface of the magnetic disk upon rotation can be reduced to the minimum. In this connection, the magnetic head can be accessed accurately to the required truck of the magnetic disk, and the hard disk drive device can be miniaturized and the storage capacity of the device can be enlarged.

While particular embodiments of the present invention have been illustrated and described, it should be obvious to those skilled in the art that various changes and modifications can be made without departing from the spirit and scope of the invention according to the appended claims.

## Claims

1. A method for processing a magnetic disk mount portion of a motor hub (1) of a hard disk drive device including a cylindrical disk fitting surface (A) around which a central aperture of a magnetic disk or disks are to be fit, and an outwardly extending flange (4) for supporting on its upper surface (B) the lower surface of the central portion of the magnetic disk, the method being **characterized in that**:
the motor hub (1) is rotated at high speed around the central axis thereof, and an outer peripheral surface of a grinding wheel (8) rotated at high speed around the central axis thereof is urged on the upper surface (B) of the outwardly extending flange (4).

2. A method for processing a magnetic disk mount portion of a motor hub (1) of a hard disk drive device including a cylindrical disk fitting surface (A) around which a central aperture of a magnetic disk or disks are to be fit, and an outwardly extending flange (4) for supporting on its upper surface (B) the lower surface of the central portion of the magnetic disk, the method being **characterized in that**:
the motor hub (1) is rotated at high speed around the central axis thereof, and a grinding wheel (8) is also rotated at high speed around the central axis thereof, the grinding wheel (8) includes a pair of tapered surfaces (8a, 8b) extending axially outwardly to reduce the diameter thereof and orthogonal with each other from an edge defined at the intersection of the tapered surfaces (8a, 8b), wherein the grinding operation is performed by urging the tapered surfaces (8a, 8b) against the disk fitting surface (A) and the upper surface (B) of the outwardly extending flange (4) respectively.

3. The method for processing a magnetic disk mount portion of a motor hub of a hard disk drive device as claimed in claim 1 or 2, wherein said grinding wheel (8) is attached to a spindle (12) of a rotationally driving apparatus (11) connected to a carriage (10) displaceable in X, Y, and Z directions, wherein the grinding wheel (8) is urged against the magnetic disk mount portion of the hub (1) through the displacement of the carriage (10).

4. The method for processing the magnetic disk mount portion of a motor hub of the hard disk drive device as claimed in claim 1 or 2, wherein said grinding wheel (8) is attached to a spindle (12) of a rotationally driving apparatus (11) connected to a carriage (10) so as to pivot around the axis extending orthogonal to the central axis of the motor hub (1), wherein the grinding wheel (8) is urged against the magnetic disk mount portion of the hub (1) by pivoting the rotationally driving apparatus (11) with respect to the carriage (10).

5. The method for processing the magnetic disk mount portion of a motor hub of a hard disk drive device as claimed in claim 1 or 2, wherein said grinding wheel (8) is attached to a spindle (12) of a rotationally driving apparatus (11) connected to a carriage (10) displaceable in X, Y, and Z directions, and the rotationally driving apparatus (11) is connected to the carriage (10) so as to pivot around the axis extending orthogonal to the central axis of the motor hub (1), wherein the grinding wheel (8) is urged against the magnetic disk mount portion of the hub (1) by pivoting the rotationally driving apparatus (11) with respect to the carriage (10) as well as the displacement of the carriage (10).

6. A motor hub of a hard disk drive device comprising a magnetic disk mount portion including a cylindrical disk fitting surface (A) around which a central aperture of a magnetic disk or disks are to be fit, and an outwardly extending flange (4) for supporting on its upper surface (B) the lower surface of the central portion of the magnetic disk, the motor hub (1) being **characterized in that**:
the motor hub (1) is rotated at high speed around the central axis thereof, and the upper surface (B) of the outwardly extending flange (4) is adapted to be ground by the outer peripheral surface of a grinding wheel (8) rotated at high speed around the axis thereof.

7. A motor hub of a hard disk drive device comprising a magnetic disk mount portion including a cylindrical disk fitting surface (A) around which a central aperture of a magnetic disk or disks are to be fit, and an outwardly extending flange (4) for supporting on its upper surface (B) the lower surface of the central portion of the magnetic disk, the motor hub (1) being **characterized in that**:
the motor hub (1) is rotated at high speed around the central axis thereof, and a grinding wheel (8) is also rotated at high speed around the central axis thereof, the grinding wheel (8) includes a pair of tapered surfaces (8a, 8b) extending axially outwardly to reduce the diameter thereof and orthogonal with each other from an edge defined at the intersection of the tapered surfaces (8a, 8b) wherein the grinding operation is effected by urging the tapered surfaces (8a, 8b) against the disk fitting surface (A) and the upper surface (B) of the outwardly extending flange (4) respectively.

8. The motor hub of a hard disk drive device as claimed in claim 6 or 7, wherein said grinding wheel (8) is attached to a spindle (12) of a rotationally driving apparatus (11) connected to a carriage (10) displaceable in X, Y, and Z directions, wherein the magnetic disk mount portion of the hub (1) is ground through the displacement of the carriage (10).

9. The motor hub of a hard disk drive device as claimed in claim 6 or 7, wherein said grinding wheel (8) is attached to a spindle (12) of the rotationally driving apparatus (11) connected to a carriage (10) so as to pivot around the axis extending orthogonal to the central axis of the motor hub (1), wherein the magnetic disk mount portion of the hub (1) is ground by pivoting the rotationally driving apparatus (11) with respect to the carriage (10).

10. The motor hub of a hard disk drive device as claimed in claim 6 or 7, wherein said grinding wheel (8) is attached to a spindle (12) of a rotationally driving apparatus (11) connected to a carriage (10) displaceable in X, Y, and Z directions, and the rotationally driving apparatus (11) is connected to the carriage (10) so as to pivot around the axis extending orthogonal to the central axis of the motor hub (1), wherein the magnetic disk mount portion of the hub (1) is ground by pivoting the rotationally driving apparatus (11) with respect to the carriage (10), and by displacing the carriage (10).

11. A motor for a hard disk drive device including a motor hub (1) around the outer periphery of which a magnetic disk or a plurality of magnetic disks are to be provided, the motor hub (1) being rotatably supported on a base through a bearing device (15), the motor being **characterized in that** the motor hub (1) is provided with a magnetic disk mount portion including a cylindrical disk fitting surface (A) around which a central aperture of a magnetic disk or disks are to be fit, and an outwardly extending flange (4) for supporting on its upper surface (B) the lower surface of the central portion of the magnetic disk, wherein the upper surface (B) of the outwardly extending flange (4) of the motor hub (1) rotated at high speed around the central axis thereof is adapted to be ground by an outer peripheral surface of a grinding wheel (8) rotated at high speed around the central axis thereof.

12. A motor for a hard disk drive device including a motor hub (1) around the outer periphery of which a magnetic disk or a plurality of magnetic disks are to be provided, the motor hub (1) being rotatably supported on a base through a bearing device (15), the motor being **characterized in that** the motor hub (1) is provided with a magnetic disk mount portion including a cylindrical disk fitting surface (A) around which a central aperture of a magnetic disk or disks are to be fit, and an outwardly extending flange (4) for supporting on its upper surface (B) the lower surface of the central portion of the magnetic disk, wherein the disk fitting surface (A) and the upper surface (B) of the outwardly extending flange (4) of the motor hub (1) rotated at high speed around the central axis thereof are adapted to be ground by a pair of tapered surfaces (8a, 8b) of a grinding wheel (8) rotated at high speed around the central axis thereof, the tapered surfaces (8a, 8b) extending axially outwardly reducing the diameter thereof and at right angle to each other from an edge defined therebetween.

13. The motor for a hard disk drive device as claimed in claim 11 or 12, wherein said grinding wheel (8) is attached to a spindle (12) of a rotationally driving apparatus (11) connected to a carriage (10) displaceable in X, Y, Z directions, wherein the magnetic disk mount portion of the hub (1) is ground through the displacement of the carriage (10).

14. The motor for a hard disk drive device as claimed in claim 11 or 12, wherein said grinding wheel (8) is attached to a spindle (12) of a rotationally driving apparatus (11) connected to a carriage (10) so as to pivot around the axis extending orthogonal to the central axis of the motor hub (1), wherein the magnetic disk mount portion of the hub (1) is ground by pivoting the rotationally driving apparatus (11) with respect to the carriage (10).

15. The motor for a hard disk drive device as claimed in claim 11 or 12, wherein said grinding wheel (8) is attached to a spindle (12) of a rotationally driving apparatus (11) connected to a carriage (10) displaceable in X, Y, and Z directions, and the rotationally driving apparatus (11) is connected to the carriage (10) so as to pivot around the axis extending orthogonal to the central axis of the motor hub (1), wherein the magnetic disk mount portion of the hub (1) is ground by pivoting the rotationally driving apparatus (11) with respect to the carriage (10), and by displacing the carriage (10).
